# FASCICULE DE BREVET EUROPEEN

(11) **EP 1 326 473 B1**
(45) Date de publication et mention de la délivrance du brevet: **27.09.2006**
(21) Numéro de dépôt: 02293233.9
(22) Date de dépôt: 24.12.2002
(51) Int. Cl.: H04Q 11/00

(54) **Dispositif de communication optique et procédé de commande de ce dispositif**
Optische Schaltvorrichtung und Kontrolleverfahren dafür
Optical switching device and control method therefor

(30) Priorité: 03.01.2002 FR 0200039
(43) Date de publication de la demande: 09.07.2003
(73) Titulaire: ALCATEL, 75008 Paris (FR)
(72) Inventeur: Penninckx, Denis, 91620 Nozay (FR); Rofidal, Olivia, Les Jardins de Bures, 91140 Bure sur Yvette (FR)
(74) Mandataire: Fournier, Michel Robert Marie

(56) Documents cités:
- EP-A- 1 058 475
- EP-A- 1 081 982
- WO-A-01/33746
- WO-A-01/58204
- OKAMOTO S ET AL: "OPTICAL PATH CROSS-CONNECT NODE ARCHITECTURES FOR PHOTONIC TRANSPORT NETWORK" JOURNAL OF LIGHTWAVE TECHNOLOGY, IEEE. NEW YORK, US, vol. 14, no. 6, 1 juin 1996 (1996-06-01), pages 1410-1422, XP000598543 ISSN: 0733-8724

## Description

La présente invention concerne un dispositif de commutation optique ainsi qu'un procédé de commande de ce dispositif, destinés à être utilisés au sein d'un réseau de transmission optique.

Les réseaux de transmission optique connus utilisant le principe de la commutation optique comportent des noeuds munis de dispositifs de commutation rapide de signaux optiques pour aiguiller des données ou groupes de données de taille fixe ou variable. Les données transmises par groupes sont en général dénommées "paquets" dans un réseau de type Internet, ou "cellules" dans un réseau de type ATM. Le cadre de la présente invention couvre non seulement la commutation par paquets, mais également la commutation de circuit.

La commutation optique consiste de manière connue à aiguiller les données, généralement sous la forme d'une modulation d'amplitude d'une onde porteuse optique, d'une liaison optique à une autre en conservant leur nature optique, c'est-à-dire sans passer dans le domaine électrique. Cette commutation est effectuée à l'aide de dispositifs de commutation optique comprenant une matrice de commutation photonique. Dans le cas de la commutation de paquets, ces dispositifs assurent à la fois l'aiguillage des données et la synchronisation des paquets en vue de gérer les conflits de façon à limiter au maximum les pertes de paquets ou de données.

Dans le cadre de réseaux de télécommunication optiques utilisant le multiplexage en longueur d'onde (WDM pour "Wavelength Division Multiplexing" en anglais), les matrices sont également prévues pour prendre en compte la dimension spectrale des signaux à commuter, c'est-à-dire qu'elles comportent des moyens de sélection et/ou de réallocation spectrale(s) utilisant des dispositifs de sélection et de conversion de longueurs d'onde.

Les dispositifs de commutation optique sont constitués d'un certain nombre de composants optiques tels que notamment des coupleurs, des commutateurs spatiaux, des portes optiques à base d'amplificateurs semiconducteurs, des lignes à retard optique et, dans un contexte WDM, des multiplexeurs/démultiplexeurs et des sources lasers accordables ou non.

Les commutateurs doivent par ailleurs assurer un niveau de performance requis en termes de taux d'erreur (BER pour "Bit Error Rate" en anglais) ou de taux de perte de paquets dans le cas de la commutation par paquets (la perte complète de paquets se produit quand aucune ressource physique d'acheminement des paquets n'est disponible). Ceci implique des contraintes de qualité pour les composants utilisés, de sorte que tout chemin optique prévu dans un commutateur, réalisé par couplages en cascade et/ou activation de plusieurs composants sélectionnés, respecte ce niveau de performance.

Une solution connue à ce problème consiste lors de la fabrication du dispositif à sélectionner les composants de manière à ne conserver que ceux qui ont les meilleures performances, ce qui diminue de manière importante le rendement de la fabrication et nécessite des tests onéreux. Cet inconvénient est particulièrement critique dans le cas fréquent où les composants sont fabriqués sous forme de barrettes regroupant plusieurs composants élémentaires tels que lasers ou portes optiques. La mise à l'écart d'un seul composant élémentaire conduit à celle d'un barrette entière.

Une autre solution consiste à trier puis placer les composants dans le dispositif de façon sélective de sorte que tout chemin ne comporte au maximum par exemple qu'un seul composant ayant de relativement faibles performances. Mais ceci pénalise également le temps donc le coût de fabrication.

Une troisième solution est décrite dans la demande internationale WO 01/33746 (XROS INC). Ce document D1 concerne les dispositifs de commutation optique et traite du problème d'améliorer leur fiabilité. Pour cela, il est fait usage de redondances, en particulier concernant un commutateur spatial ("optical switch fabric"). Il est prévu deux commutateurs spatiaux, l'un étant redondant, on détecte les chemins défectueux dans ces commutateurs et on invalide les états des commutateurs correspondant à ces chemins défectueux.

Le but de la présente invention est donc de mettre au point un dispositif de commutation optique dont les performances sont acceptables notamment en terme de taux d'erreur et homogènes quel que soit l'état de commutation du dispositif, sans rendre nécessaire une sélection sévère ou une disposition spécifiques des composants ou encore une redondance matérielle.

La présente invention propose à cet effet un dispositif de commutation optique comprenant :
- une matrice de commutation optique comportant
   - une pluralité de ports d'entrée,
   - une pluralité de ports de sortie,
   - des moyens de commutation situés entre lesdits ports d'entrée et de sortie,
- des moyens de commande de ladite matrice de commutation, lesdits moyens de commutation comprenant un commutateur spatial ayant des entrées couplées respectivement auxdits ports d'entrée et des sorties couplées à des étages de sélection spectrale, les différents états du commutateur spatial et des étages de sélection spectrale définissant ainsi une pluralité de chemins optiques entre lesdits ports d'entrée et de sortie de sorte que toute donnée entrant par l'un desdits ports d'entrée puisse être aiguillée sélectivement vers l'un desdits ports de sortie en empruntant l'un desdits chemins optiques,
ledit dispositif étant **caractérisé en ce qu'**il comporte une pluralité de tables de configuration (14) correspondant respectivement à des classes de qualité de service différentes, ces classes correspondant respectivement à différentes valeurs limites prédéterminées de taux d'erreur de transmission, en ce que sont inscrites dans chaque table des données d'identification de chemins optiques autorisés assurant un taux d'erreur de transmission inférieur à la valeur limite correspondant à cette classe, lesdits moyens de commande coopérant avec lesdites tables de configuration de façon à n'autoriser pour chaque classe que des états du commutateur spatial et des étages de sélection spectral correspondant à ces chemins optiques autorisés.

On peut ainsi fabriquer un dispositif selon l'invention avec les composants disponibles, sans présélection sévère de ces derniers, ni dispositions spécifiques. Il suffit de déterminer après montage les chemins optiques ayant des performances insuffisantes et de les exclure des tables de configuration. De cette manière, les moyens de commande peuvent prendre en compte cette information et aiguiller les données uniquement sur les chemins prédéterminés autorisés, ce qui assure un niveau requis de performances.

La programmation de chaque table de configuration peut être faite lors de la fabrication, mais peut également être modifiée en cours d'exploitation du dispositif par mises à jour régulières, de manière à prendre en compte l'évolution du dispositif en cours d'exploitation. Par exemple, si à cause du vieillissement une dégradation de caractéristiques de certains composants rend les performances de certains chemins insuffisantes, il suffit alors simplement de modifier en conséquence les tables de configuration concernées.

L'invention tire profit du fait que les ressources de transmission que sont les longueurs d'onde, bandes de longueurs d'onde, fibres ou encore les instants temporels dans le cas de la commutation par paquets peuvent être « banalisées » en sortie, c'est-à-dire ne sont pas strictement liées à des destinations spécifiques des signaux à transmettre dans le réseau. En d'autres termes, l'invention offre la possibilité d'interdire les chemins les plus mauvais, mais qui, par la banalisation des ressources, ne sont pas strictement indispensables pour que les informations parviennent à leurs destinataires respectifs.

De manière avantageuse, entre chaque port d'entrée et chaque port de sortie il existe au moins un chemin optique autorisé. Ceci permet de ne pas trop limiter les fonctionnalités du dispositif.

En outre, les moyens de commutation peuvent comprendre des étages de conversion de longueur d'onde couplés en aval desdits étages de sélection spectrale.

Selon un mode de réalisation avantageux, des moyens de conversion de longueurs d'onde sont placés en entrée de la matrice.

D'autres caractéristiques et avantages de la présente invention apparaîtront dans la description suivante d'un mode de réalisation de la présente invention, donnée à titre illustratif et nullement limitatif.

Dans les figures suivantes :
- la figure 1 représente de manière schématique un dispositif selon l'invention destiné à être utilisé dans un réseau WDM à commutation par paquets;
- la figure 2 représente un exemple de table de configuration mise en mémoire au sein des moyens de commande du dispositif de la figure 1.

Dans ces figures, les éléments communs portent les mêmes signes de référence.

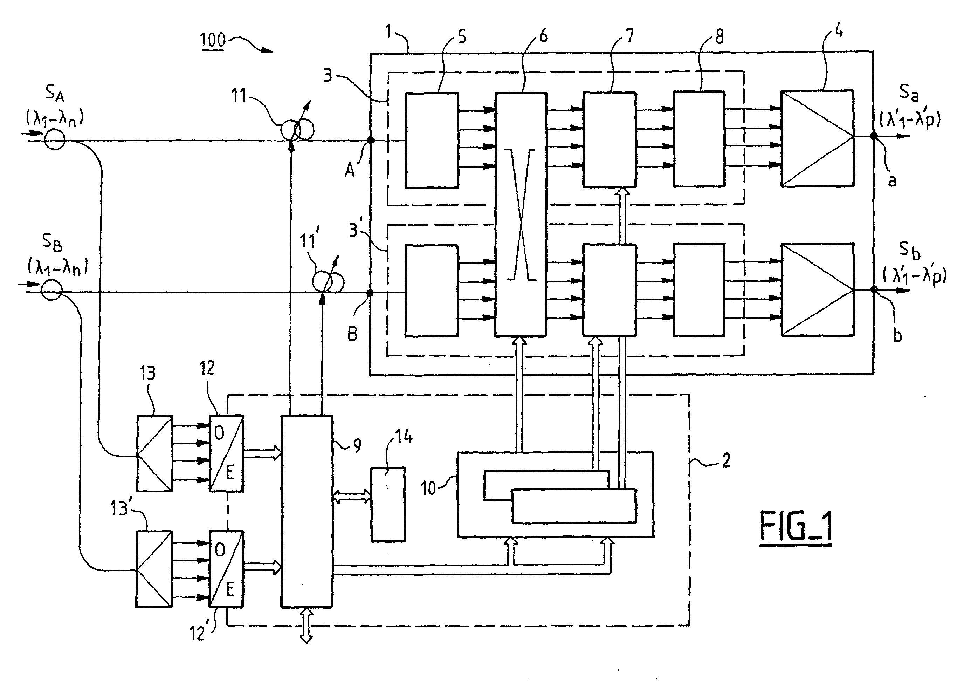

La figure 1 représente un dispositif 100 selon l'invention dans le cas d'un réseau WDM à commutation de paquets.

Le dispositif comprend une matrice de commutation 1 et une unité électronique de commande associée 2. La matrice 1 possède une pluralité de ports d'entrée et une pluralité de ports de sortie. Pour des raisons de clarté, seules deux entrées A et B et deux sorties a et b ont été représentées en figure 1.

Les entrées A et B sont prévues pour recevoir respectivement des signaux optiques WDM d'entrée S_{A} et S_{B}, et les sorties a et b fournissent respectivement des signaux optiques WDM de sortie Sₐ et S_{b}. Les signaux S_{A} et S_{B} sont constitués chacun de plusieurs composantes spectrales susceptibles d'être portées respectivement par n longueurs d'onde d'entrée attribuées à n canaux spectraux. De même, les signaux de sortie Sₐ et S_{b} sont formés de composantes spectrales susceptibles d'être portées respectivement par p longueurs d'onde de sortie.

La matrice 1 possédant en général autant d'entrées que de sorties, elle comporte des modules de commutation 3, 3' associés chacun à un couple d'entrée et de sortie.

Les signaux S_{A} et S_{B} sont couplés respectivement d'une part aux modules 3, 3' par l'intermédiaire de lignes à retard réglable 11, 11' respectivement, et d'autre part à des moyens de conversion optique/électrique 12, 12' de l'unité de commande 2 par l'intermédiaire de démultiplexeurs 13, 13'.

La matrice de commutation 1 comporte, couplés en cascade, des ensembles de lignes à retard 5 appartenant chacun à l'un des modules 3, 3', un commutateur spatial 6 commun, des étages de sélection spectrale 7, des étages de ré-allocation spectrale 8 effectuant des conversions de longueurs d'onde, et des étages de couplage de sortie 4 pour chacun des modules.

L'unité électronique de commande 2 comporte une unité de traitement 9 reliée d'une part aux sorties des moyens de conversion 12, 12' et d'autre part à un circuit de contrôle 10.

Dans ce contexte, l'unité de traitement 9 a d'abord pour fonction de décoder les différentes en-têtes de paquets reçus pour en extraire les destinations respectives. En fonction de ces informations de destination et d'informations prédéfinies relatives à l'architecture du réseau, un algorithme prévu pour gérer les éventuels conflits est exécuté par l'unité 9 pour déterminer pour chaque paquet reçu porté par chaque longueur d'onde vers quel port de sortie de la matrice et à quel moment le paquet doit être dirigé. Ces informations sont transmises au circuit de contrôle 10 qui envoie alors des signaux de commande appropriés au commutateur spatial 6 et aux étages de sélection spectrale 7.

Ainsi, en fonction de l'état du commutateur spatial 6 et des longueurs d'onde sélectionnées par les différents sélecteurs 7, chaque paquet de données appartenant à un multiplex d'entrée quelconque et porté par une longueur d'onde quelconque peut, après un retard approprié, être aiguillé vers une sortie quelconque de la matrice et, grâce aux étages de conversion de longueur d'onde, être porté en sortie par une nouvelle longueur d'onde. Il est donc possible de transférer sur une sortie quelconque choisie un paquet choisi appartenant à un canal spectral choisi d'un multiplex d'entrée choisi. Les différents états du commutateur spatial 6 et des étages de sélection spectrale 7 définissent de la sorte une pluralité de chemins (ou itinéraires) optiques entre les ports d'entrée A, B et de sortie a, b.

Dans le cas d'un dispositif de commutation classique, toutes les ressources de la matrice de commutation 1 gérées par l'unité de commande 2 sont susceptibles d'être utilisées. Cela veut dire que tous les chemins optiques prédéfinis dans le dispositif sont eux aussi susceptibles d'être utilisés

Par contre, selon l'invention l'unité de traitement 9 coopère en outre avec une table de configuration 14 dans laquelle sont identifiés les différents chemins optiques autorisés, c'est-à-dire ceux pour lesquels le taux d'erreur de transmission est inférieur à une valeur prédéterminée. Cette valeur limite de taux d'erreur est normalement imposée au niveau des sorties du dispositif de commutation et résulte d'un cahier des charges convenu.

En pratique, l'identification de ces chemins résulte d'une série de mesures de taux d'erreur de type classique et impliquant tous les chemins possibles par activations successives de ces chemins. En fonction des résultats obtenus et du taux d'erreur limite, on en déduit les chemins optiques autorisés et on constitue la table 14 sous la forme d'enregistrements dans une mémoire de données d'identification de ces chemins.

La table ainsi constituée peut être contenue dans un module de mémoire dédié et dans ce cas, de façon classique, des moyens d'accès sont prévus pour permettre à l'unité de traitement 9 de lire ces données. Selon une autre possibilité, la table est simplement contenue dans une zone mémoire réservée d'une mémoire de données appartenant à l'unité de traitement 9.

Enfin l'algorithme est bien sûr adapté pour tenir compte de ces informations supplémentaires. Toutes ces adaptations pour mettre en oeuvre l'invention sont à la portée de l'homme du métier et ne nécessitent donc pas d'explications plus détaillées.

Selon un mode de réalisation avantageux prenant en compte le fait que le réseau peut être prévu pour assurer différents niveaux de qualité de service, il peut y avoir plusieurs tables telle que la table 14 correspondant respectivement à des classes de qualité de service différentes, c'est-à-dire correspondant respectivement à différentes valeurs limites prédéterminées de taux d'erreur de transmission. Ainsi, en fonction de la classe de service à assurer l'algorithme prendra en compte les données inscrites dans la table associée à cette classe de service.

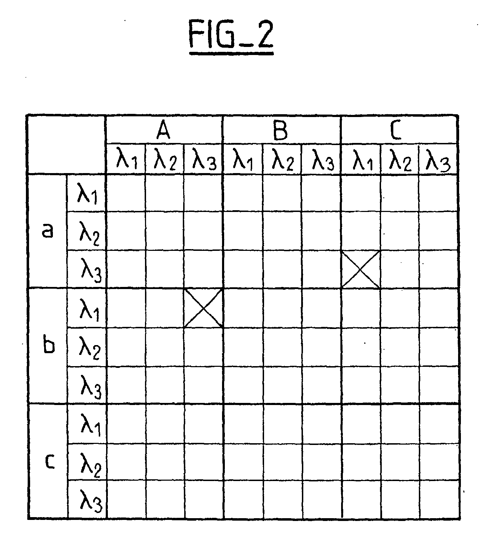

Un exemple de table de configuration 14 est illustré schématiquement par la figure 2.

Cet exemple correspond à une matrice 1 de commutation spatiale et spectrale à trois ports d'entrée A, B et C et trois ports de sortie a, b et c, avec trois longueurs d'onde possibles λ₁ à λ₃ pour porter un signal présent à chaque port d'entrée et de sortie. Ainsi, la matrice présente 81 chemins possibles correspondant aux cases de la table représentée par la figure 2.

La création d'un chemin est effectuée d'une part en positionnant le commutateur spatial 6 pour qu'il couple un port d'entrée, par exemple A, vers au moins un sélecteur de longueur d'onde de l'étage de sélection spectrale 7 associé à un des ports de sortie, par exemple b. D'autre part, ce sélecteur de longueur d'onde est commandé pour transmettre la longueur d'onde particulière, par exemple λ₃, qui porte le signal à véhiculer par ce chemin. Enfin, le convertisseur de longueur d'onde de l'étage 8 couplé à la sortie du sélecteur de longueur d'onde délivrera ce même signal, mais porté par une longueur d'onde de sortie, par exemple λ₁. Après avoir effectué les tests physiques portant sur les différents chemins au travers de la matrice, on constate que certains chemins conduisent à un taux d'erreur trop élevé. Ils doivent donc être interdits. Cette information est donc enregistrée dans la table de configuration 14, comme représenté sur la figure 2 par des croix dans les cases correspondantes.

Ainsi, si le sélecteur de la longueur d'onde λ₃ et/ou le convertisseur à la longueur d'onde λ₁ de l'exemple de chemin précédent a (ont) des qualités insuffisantes et/ou si le couplage entre le sélecteur de longueur d'onde et le commutateur spatial 6 introduit des pertes élevée, ce chemin peut devoir être évité. Dans ce cas, pour atteindre le port b à partir de la longueur d'onde λ₃ en entrée sur le port A, les longueurs d'ondes λ₂ et λ₃ peuvent être utilisées au niveau de la sortie b, mais pas la longueur d'onde λ₁. Ainsi, même lorsque certains chemins sont interdits, la connexion complète de la matrice est assurée, c'est-à-dire que chaque donnée d'entrée peut tout de même être guidée vers chaque sortie grâce au fait que la ressource physique constituée par la longueur d'onde de sortie est banalisée.

On peut noter que cette notion de banalisation de ressources peut s'appliquer également aux ports de sortie, sachant que dans un réseau de transmission il existe généralement plusieurs itinéraires pour atteindre une destination finale. Ainsi, l'interdiction totale d'un port de sortie n'implique pas nécessairement l'impossibilité d'accéder à certaines destinations.

De préférence toutefois, pour éviter de retirer trop de fonctionnalités à la matrice 1, on peut assurer par une sélection partielle des composants que pour chaque combinaison entrée-sortie (du type A-a, A-b, ..., C-b, C-c), au moins un chemin optique est disponible.

Il convient de noter que l'invalidation sélective de chemins proposée par l'invention n'est pas équivalente à des mises hors service individuelles et permanentes de certains composants ou certaines liaisons intérieures à la matrice. En effet, il est possible qu'un composant de moindre qualité reste utilisable, mais uniquement dans des chemins où les autres composants et/ou les liaisons sont de qualité suffisante pour compenser cette moindre qualité de sorte que chacun de ces chemins dans son ensemble présente la qualité requise. Il en résulte que les éléments constitutifs de la matrice sont utilisés de façon optimale.

De même, la solution selon l'invention qui prend en compte les interconnexions à l'intérieur de la matrice (c'est-à-dire en fait les différents itinéraires internes possibles pour les signaux) n'est pas équivalente non plus à prévoir une redondance de chemins complets, par exemple en dupliquant la matrice, pour pouvoir remplacer les chemins défectueux par des chemins totalement redondants, sans réduction des fonctionnalités.

Bien entendu, l'invention n'est pas limitée au mode de réalisation qui vient d'être décrit. L'invention s'applique à tout système de commutation à commutation spectrale (WDM) utilisant ou non la commutation par paquets. Dans ce dernier cas on dispose d'une ressource supplémentaire banalisée qui est la ressource temporelle matérialisée par les ensembles de lignes à retard 5 de la figure 1.

L'adaptation du dispositif à toutes ces possibilités est à la portée de l'homme du métier.

En outre, il est possible, pour accroître la flexibilité, de placer des convertisseurs de longueur d'onde (non représentés sur la figure 1) en entrée de la matrice 1; on peut ainsi modifier par exemple une longueur d'onde d'entrée si l'on constate que certains ports de sortie sont inaccessibles pour cette longueur d'onde d'entrée. On a alors « banalisé » également la longueur d'onde d'entrée.

Enfin, on pourra remplacer tout moyen par un moyen équivalent sans sortir du cadre de l'invention revendiquée.

## Revendications

1. Dispositif de commutation optique (100) comprenant :
• une matrice de commutation optique (1) comportant :
- une pluralité de ports d'entrée (A, B),
- une pluralité de ports de sortie (a, b),
- des moyens de commutation (3, 3') situés entre lesdits ports d'entrée (A, B) et de sortie (a, b),
• des moyens de commande (2) de ladite matrice de commutation (1),
lesdits moyens de commutation (3, 3') comprenant un commutateur spatial (6) ayant des entrées couplées respectivement auxdits ports d'entrée (A, B) et des sorties couplées à des étages de sélection spectrale (7), les différents états du commutateur spatial (6) et des étages de sélection spectrale (7) définissant ainsi une pluralité de chemins optiques entre lesdits ports d'entrée (A, B) et de sortie (a, b) de sorte que toute donnée entrant par l'un desdits ports d'entrée (A, B) puisse être aiguillée sélectivement vers l'un desdits ports de sortie (a, b)en empruntant l'un desdits chemins optiques,
ledit dispositif étant **caractérisé en ce qu'**il comporte une pluralité de tables de configuration (14) correspondant respectivement à des classes de qualité de service différentes, ces classes correspondant respectivement à différentes valeurs limites prédéterminées de taux d'erreur de transmission, **en ce que** sont inscrites dans chaque table des données d'identification de chemins optiques autorisés assurant un taux d'erreur de transmission inférieur à la valeur limite correspondant à cette classe, lesdits moyens de commande (2) coopérant avec lesdites tables de configuration (14) de façon à n'autoriser pour chaque classe que des états du commutateur spatial (6) et des étages de sélection spectral (7) correspondant à ces chemins optiques autorisés.

2. Dispositif selon la revendication 1, **caractérisé en ce qu'**entre chaque port d'entrée (A, B) et chaque port de sortie (a, b) il existe au moins un chemin optique autorisé.

3. Dispositif selon l'une des revendications 1 ou 2, **caractérisé en ce que** des moyens de conversion de longueurs d'onde sont placés en entrée de ladite matrice (1).

4. Dispositif selon l'une des revendications 1 à 3, **caractérisé en ce qu'**il comprend des étages de conversion de longueur d'onde (8) couplés en aval desdits étages de sélection spectrale (7).

## Claims

1. An optical switching device (100) comprising:
an optical switch matrix (1) comprising:
- a plurality of input ports (A, B);
- a plurality of outlet ports (a, b);
- switching means (3, 3') situated between said input ports (A, B) and output ports (a, b); and
- control means (2) for controlling said switch matrix (1);
said switch means (3, 3') comprising a space switch (6) having inputs coupled respectively to said input ports (A, B) and outputs coupled to spectrum selector stages (7), thereby defining a plurality of optical paths between said input ports (A, B) and output ports (a, b) such that any data incoming via any one of said input ports (A, B) can be switched selectively to any one of said output ports (a, b) by taking one of said optical paths, said device being **characterized in that** it includes a plurality of configuration tables (14) corresponding respectively to different classes of quality of service, said classes corresponding respectively to different predetermined limit values for error transmission rates, and **in that** each table records data identifying authorized optical paths providing transmission error rates less than the limit value corresponding to said class, said control means (2) co-operating with said configuration tables (14) so as to authorize for each class only those states of the space switch (6) and of the spectrum selector (7) that correspond to said authorized optical paths.

2. A device according to claim 1, **characterized in that** between each input port (A, B) and each output port (a, b), there exists at least one authorized optical path.

3. A device according to claim 1 or claim 2, **characterized in that** wavelength converter means are placed at the input to said matrix (1).

4. A device according to any one of claims 1 to 3, **characterized in that** it includes wavelength converter stages (8) coupled downstream from said spectrum selector stages (7).

## Patentansprüche

1. Optische Schaltvorrichtung (100) beinhaltend:
- eine optische Koppelmatrix (1) mit:
- einer Vielzahl von Eingangsports (A, B),
- einer Vielzahl von Ausgangsports (a, b),
- Schaltmitteln (3, 3'), die zwischen diesen Eingangsports (A, B) und diesen Ausgangsports (a, b) liegen,
- Mittel zur Steuerung (2) dieser Koppelmatrix (1),
wobei diese Schaltmittel (3, 3') einen Schalter für raumgeteilte Vermittlung (6) enthalten, der Eingänge hat, die jeweils an diese Eingangsports (A, B) gekoppelt sind und Ausgänge, die an Spektrumwahlstufen (7) gekoppelt sind, wobei die verschiedenen Status des Schalters für raumgeteilte Vermittlung (6) und der Spektrumwahlstufen (7) somit eine Vielzahl von Lichtwegen zwischen diesen Emgangsports (A, B) und diesen Ausgangsports (a, b) definieren, so dass jedwede Daten, die durch einen dieser Eingangsports (A, B) hereinkommen, selektiv zu einem dieser Ausgangsports (a, b) geleitet werden können, indem sie einen dieser Lichtwege einschlagen,
wobei diese Vorrichtung **dadurch gekennzeichnet ist, dass** sie eine Vielzahl von Konfigurationstabellen (14) enthält, die jeweils unterschiedlichen Klassen Dienstqualität entsprechen, wobei diese Klassen jeweils festgelegten unterschiedlichen Grenzwerten für die Übertragungsfehlerrate entsprechen, **dadurch gekennzeichnet, dass** in jeder Tabelle identifikationsdaten für erlaubte Lichtwege eingetragen sind, die eine Übertragungsfehlerrate unter dem dieser Klasse entsprechenden Grenzwert gewährleisten, wobei diese Mittel zur Steuerung (2) zusammenwirken mit diesen Konfigurationstabellen (14), so dass für jede Klasse nur solche Status des Schalters für raumgeteilte Vermittlung (6) und der Spektrumwahlstufen (7) zugelassen werden, die diesen erlaubten Lichtwegen entsprechen.

2. Vorrichtung gemäß Anspruch 1, **dadurch gekennzeichnet, dass** zwischen jedem Eingangsport (A, B) und jedem Ausgangsport (a, b) mindestens ein erlaubter Lichtweg vorhanden ist.

3. Vorrichtung gemäß einem der Ansprüche 1 oder 2, **dadurch gekennzeichnet, dass** Mittel zur Wellenlängenumwandlung am Eingang dieser Matrix (1) angeordnet sind.

4. Vorrichtung gemäß einem der Ansprüche 1 bis 3, **dadurch gekennzeichnet, dass** sie Wellenlängenumwandlungsstufen (8) enthält, die unterhalb dieser Spektrumwahlstufen (7) gekoppelt sind.
